# FASCICULE DE BREVET EUROPEEN

(11) **EP 2 462 492 B1**
(45) Date de publication et mention de la délivrance du brevet: **13.08.2014**
(21) Numéro de dépôt: 10752892.9
(22) Date de dépôt: 28.07.2010
(51) Int. Cl.: G05B 19/401

(54) **PROCEDE DE POSITIONNEMENT D'UN MICRO-OUTIL D'ENLEVEMENT DE MATIERE ET MACHINE OUTIL EN FAISANT APPLICATION**
VERFAHREN ZUR POSITIONIERUNG EINES MIKROINSTRUMENTS ZUR MATERIALENTFERNUNG UND MASCHINENWERKZEUG MIT DIESEM VERFAHREN
METHOD FOR POSITIONING A MICROTOOL FOR REMOVING MATERIAL, AND MACHINE TOOL MAKING USE OF SAID METHOD

(30) Priorité: 06.08.2009 FR 0955528
(43) Date de publication de la demande: 13.06.2012
(73) Titulaire: Université Claude Bernard Lyon I, 69622 Villeurbanne Cedex (FR); Centre National de la Recherche Scientifique (CNRS), 75794 Paris Cedex 16 (FR)
(72) Inventeur: MORIN, Pierre, F-69300 Caluire (FR)
(74) Mandataire: Thibault, Jean-Marc
(86) Numéro de dépôt international: PCT/FR2010/051606
(87) Numéro de publication internationale: WO 2011/015772

(56) Documents cités:
- EP-A1- 1 918 795
- US-A- 4 755 949

## Description

La présente invention concerne le domaine technique du micro-usinage par enlèvement de matière, de pièces relevant de la microtechnologie et elle vise plus précisément un procédé permettant de positionner un micro-outil d'enlèvement de matière.

L'objet de l'invention trouve une application particulièrement avantageuse mais non exclusivement, dans le domaine de la fabrication des microsystèmes au sens général.

Dans l'état de la technique, il est apparu la possibilité de façonner des matériaux à l'échelle du micron ou inférieur au micron en vue d'obtenir des microsystèmes susceptibles de trouver de nombreuses applications notamment dans les domaines des capteurs, des microsystèmes séparatifs appliqués à la chimie analytique, des composants électroniques tels que les transistors.

Afin de pouvoir réaliser de très petits motifs sur une pièce, il peut être envisagé d'améliorer les techniques d'usinage par enlèvement de matière, en utilisant les techniques d'enlèvement de matière par laser ou par électroérosion et/ou développer des techniques par lithographie. Dans de nombreuses applications, il apparaît nécessaire de recourir à plusieurs de ces techniques qui présentent chacune leurs inconvénients et leurs avantages spécifiques. A cet égard, il doit être noté que la technique d'usinage par enlèvement de matière présente une imprécision due notamment aux défauts de perpendicularité et de rectitude des tables de support et de déplacement de la pièce selon les trois axes. Cette imprécision devient problématique lorsque l'opération d'usinage par enlèvement de matière est à réaliser sur une pièce obtenue par d'autres techniques telles que par lithographie ou électroérosion. Il apparaît difficile voire impossible d'obtenir un positionnement précis compatible avec les façonnages déjà réalisés.

La demande de brevet EP-A1-1 918 795 décrit une machine d'usinage d'une pièce à l'aide d'un outil d'enlèvement de matière. Cette machine comporte des capteurs de position permettant de détecter la position des axes de déplacement. Cette machine comporte également un système pour déterminer la déviation entre les positions détectées et les positions de commande des axes de déplacement.

A partir de ces déviations, le point de contact entre l'outil et la pièce est détecté. Cette machine nécessite la mise en oeuvre de capteurs de grande précision très coûteux. Une telle machine ne permet pas d'obtenir un positionnement précis et rapide de la pièce par rapport à l'outil d'usinage, compatible avec la précision requise dans le domaine de la microtechnologie.

La présente invention vise donc à remédier aux inconvénients de l'état de la technique en proposant un procédé simple, rapide et peu coûteux, permettant de positionner un micro-outil d'enlèvement de matière afin de s'affranchir des défauts de perpendicularité et de rectitude des tables de support et de déplacement de la pièce à façonner.

Un autre objet de l'invention est de proposer un procédé de positionnement des micro-outils d'enlèvement de matière compatible avec les autres techniques de façonnage notamment de micro-usinage par des procédés lithographiques.

Pour atteindre un tel objectif, l'invention concerne un procédé pour positionner à l'aide d'un microscope muni d'un réticule, une pièce pour permettre son usinage en un point d'usinage, à l'aide d'un micro-outil d'enlèvement de matière. Selon l'invention :
- on déplace la pièce par rapport au micro-outil afin de réaliser une empreinte sur la pièce à l'aide du micro-outil,
- on écarte selon l'axe d'une première mesure, la pièce par rapport au micro-outil afin de la placer dans une position de référence dans laquelle on visualise l'empreinte dans le réticule du microscope,
- on déplace la pièce selon l'axe d'au moins une deuxième mesure pour placer le point d'usinage de la pièce dans le réticule du microscope,
- et on rapproche selon l'axe la pièce du micro-outil d'une valeur égale à la somme des première et deuxième mesures axiales pour assurer l'usinage par le micro-outil, de la pièce au point d'usinage.

Selon une variante de réalisation, le procédé consiste à choisir comme point d'usinage, un repère optique réalisé sur la pièce ou présenté par la pièce.

Selon une autre variante de réalisation, le procédé consiste à choisir le point d'usinage par rapport à un repère optique réalisé sur la pièce ou présenté par la pièce.

Selon un exemple d'application, le procédé consiste à visualiser l'empreinte à travers la pièce de nature transparente.

Selon un autre exemple d'application, le procédé consiste à visualiser l'empreinte à travers une pièce intermédiaire de nature transparente assemblée fixement à la pièce à usiner de nature opaque.

Avantageusement, le procédé consiste à maintenir en position fixe le microscope lors du positionnement du point d'usinage de la pièce dans le réticule du microscope.

Selon une variante préférée de réalisation, le procédé consiste à visualiser l'empreinte dans le réticule du microscope lors de la réalisation de l'empreinte sur la pièce.

Avantageusement, le procédé consiste à déplacer le microscope pour visualiser et centrer l'empreinte dans le réticule du microscope.

Un autre objet de l'invention est de proposer une machine outil pour la mise en oeuvre du procédé de positionnement conforme à l'invention.

A cet effet, la machine outil pour usiner à l'aide d'un micro-outil rotatif une pièce supportée par un premier système de positionnement comporte :
- un microscope comportant un réticule et déplaçable par un deuxième système de positionnement, le microscope s'étendant d'un côté de la pièce située du côté opposé de celui occupé par un micro-outil,
- un dispositif de commande des systèmes de positionnement pour déplacer la pièce et le microscope selon le procédé conforme à l'invention.

Avantageusement, la machine outil comporte un microscope équipé d'une caméra reliée à un écran de visualisation sur lequel est tracée une mire jouant le rôle de réticule.

Diverses autres caractéristiques ressortent de la description faite ci-dessous en référence aux dessins annexés qui montrent, à titre d'exemples non limitatifs, des formes de réalisation de l'objet de l'invention.
Les **Figures 1 à 5** illustrent diverses étapes caractéristiques du procédé de positionnement conforme à l'invention.
La **Figure 6** est une vue d'un exemple de réalisation d'une pièce par le procédé conforme à l'invention.
La **Figure 7** est une vue d'un autre exemple de pièce susceptible d'être façonnée par le procédé conforme à l'invention.

L'objet de l'invention concerne un procédé adapté pour positionner une pièce afin d'assurer son usinage à l'aide d'un micro-outil d'enlèvement de matière à l'aide d'une machine outil représentée uniquement à titre schématique sur les dessins dans la mesure où la réalisation est bien connue de l'homme du métier.

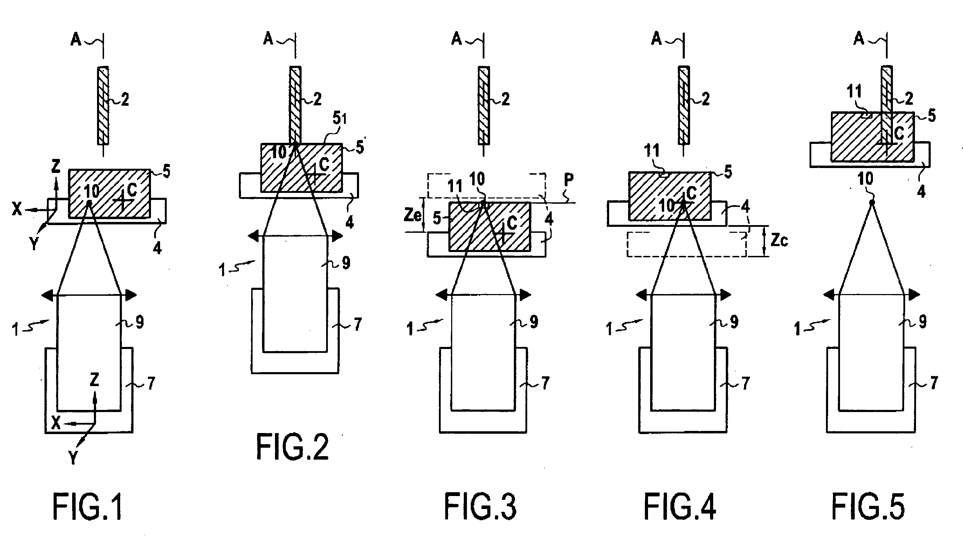

Tel que cela ressort plus précisément des **Fig. 1** à **5****,** la machine outil **1** comporte un micro-outil d'enlèvement de matière **2** tel qu'une fraise ou un foret entraîné en rotation autour de son axe **A.** Pour les besoins de l'invention, le micro-outil d'enlèvement de matière **2** peut être fixe dans l'espace, c'est-à-dire immobile selon les trois axes perpendiculaires de l'espace **X, Y, Z.**

La machine outil **1** comporte également un premier système **4** de déplacement pour une pièce **5** à usiner. Ce premier système de déplacement **4** tel une table est monté classiquement par tous moyens de guidage appropriés sur un bâti afin de pouvoir être translaté dans l'espace selon les trois axes **X, Y, Z.** De manière classique, ce premier système de déplacement **4** comporte un support de fixation adapté à la pièce **5** à usiner.

La pièce **5** est représentée à titre schématique, mais comporte divers composants ou parties pour former un microsystème. La pièce **5** est réalisée en tous matériaux appropriés. Dans l'exemple illustré sur les **Fig. 1** à **6****,** la pièce **5** est réalisée en un matériau transparent tel qu'un polymère.

La machine outil **1** comporte également un deuxième système de déplacement **7** monté par tous moyens de guidage approprié sur un bâti pour pouvoir se déplacer dans l'espace selon les trois axes **X, Y, Z.** Ce deuxième système de déplacement **7** tel une table est adapté pour être équipé d'un microscope optique **9** de tous types connus en soi. Avantageusement, le microscope optique **9** est muni d'un réticule ou d'une mire permettant grâce à la profondeur de champ réduite du microscope optique, de matérialiser un repère **10** pour permettre des alignements comme cela sera expliqué dans la suite de la description.

Selon une caractéristique avantageuse de réalisation, le microscope **9** et par suite le deuxième système de déplacement **7** est placé par rapport à la pièce **5** du côté opposé du micro-outil **2** afin de pouvoir être aligné avec l'axe du micro-outil **2** comme cela sera expliqué dans la suite de la description. Dans la mesure où la pièce **5** est transparente, le microscope **9** est apte à visualiser tous points de la pièce **5.**

Les systèmes de déplacement **4, 7** sont de préférence motorisés et pilotés par un dispositif de commande comportant un ordinateur et un écran. Classiquement, l'ordinateur envoie les instructions de déplacement à l'électronique de pilotage des moteurs équipant les systèmes de déplacement **4, 7.** Le microscope optique **9** est équipé avantageusement d'une caméra permettant de visualiser sur l'écran de l'ordinateur, la zone observée. Dans ce cas, une mire tracée sur l'écran peut jouer le rôle de réticule.

La machine outil **1** décrite ci-dessus permet de mettre en oeuvre un procédé pour assurer l'usinage de la pièce **5,** à l'aide du micro-outil **2,** en un point d'usinage repéré **C** sur les **Fig. 1** à **5****.**

Le procédé selon l'invention consiste, comme cela apparaît aux **Fig. 1** et **2****,** à déplacer la pièce **5** à l'aide du premier système de positionnement **4** par rapport au micro-outil **2** afin de réaliser, une empreinte **11** sur la pièce **5** à l'aide du micro-outil **2.** Cette empreinte **11** est réalisée sur une partie non fonctionnelle de la pièce **5.** Dans l'exemple illustré, l'empreinte **11** est réalisée sur une face principale **5₁** de la pièce **5.** La réalisation de cette empreinte **11** est visualisée à l'aide du microscope **9.**

Selon cette variante préférée de réalisation, le microscope **9** est déplacé à l'aide de son système de déplacement **7** afin d'être focalisé sur l'extrémité du micro-outil **2.** Ensuite, la pièce **5** est déplacée en direction du micro-outil **2** à l'aide de son système de positionnement **4** de manière que le micro-outil **2** vienne au contact avec la pièce **5** pour réaliser une empreinte **11**. L'enlèvement de la matière est limité à une profondeur juste suffisante pour être visible par une trace ou une empreinte **11,** observable par le microscope **9.** Avantageusement, l'empreinte **11** se trouve visualisée dans le **réticule 10** du microscope **9.** Il est à noter que l'alignement entre le microscope **9 et** le micro-outil **2** et/ou l'empreinte **11** est possible par le montage du microscope **9** et du micro-outil **2** de part et d'autre de la pièce **5.**

Tel que cela ressort plus précisément de la **Fig. 3****,** le procédé consiste ensuite à éloigner la pièce **5** du micro-outil **2** à l'aide du système de déplacement **4.** La pièce **5** est ainsi écartée par rapport au micro-outil **2,** selon l'axe **Z** et selon une première mesure appelée **Zₑ** afin de placer l'empreinte **11** dans une position de référence correspondant à un plan de référence schématisé **P.** Dans cette position de référence, le microscope **9** est déplacé à l'aide du deuxième système de positionnement **7** afin de visualiser et de centrer l'empreinte **11** dans le réticule **10** du microscope **9.** Le positionnement de l'empreinte **11** au centre du réticule **10** du microscope **9** permet de matérialiser de manière précise, un point de référence de l'espace.

Le procédé consiste ensuite à déplacer la pièce **5** selon l'axe **Z** et au moins selon une deuxième mesure **Z_{c}** pour placer le point d'usinage **C** de la pièce **5** dans la mire **10** du microscope **9.** D'une manière générale et tel qu'illustré à la **Fig. 4****,** la pièce **5** est déplacée par son dispositif de déplacement **4,** selon des valeurs **Z_{c}, X_{c}, Y_{c},** afin d'amener le point d'usinage **C** dans le réticule **10** du microscope **9.** La pièce **5** est ainsi déplacée pour centrer le point d'usinage **C** sur le réticule **10** de manière à coïncider avec le point de référence de l'espace préalablement défini. Il est à noter que le microscope **9** reste fixe entre la position de référence de la pièce **5** illustrée à la **Fig. 3** et la position de visualisation du point d'usinage **C** par le microscope **9** illustrée à **la** **Fig. 4****.**

Le procédé selon l'invention consiste ensuite à rapprocher selon l'axe **Z,** la **pièce 5** du micro-outil **2** d'une valeur égale à la somme des première **Zₑ** et deuxième **Z_{c}** mesures pour assurer l'usinage par le micro-outil **2** de la pièce **5** au point d'usinage **C.** Tel que cela ressort de la **Fig. 5****,** la pièce **5** est donc déplacée par son système de déplacement **4** selon l'axe **Z** d'une valeur égale à - **(Zₑ+Z_{c})** pour obtenir l'usinage désiré. Lors du déplacement de la pièce **5** selon l'axe **Z,** le microscope **9** reste fixe.

Il ressort de la description qui précède que le positionnement de l'usinage est obtenu en superposant dans le temps, dans un point de référence de l'espace (centre du réticule **10** du microscope **9**), l'image d'une empreinte **11** du micro-outil **2** laissée sur la pièce **5** et l'image de la zone **C** à usiner. Le positionnement obtenu en déplaçant la pièce **5** conduit à un positionnement virtuel du micro-outil **2** par rapport au point d'usinage **C.** Il permet ainsi d'anticiper la position qu'aura la pièce **5** par rapport au micro-outil 2 en fin d'usinage. Une telle méthode s'écarte des procédés connus qui reposent sur le positionnement de la pièce par rapport au micro-outil.

Un tel procédé permet de s'affranchir de nombreux défauts d'alignement inhérents à la machine outil et en particulier des défauts de perpendicularité et de rectitude de la table porte-pièce **4.** Entre les étapes illustrées aux **Fig. 2** et **3****,** la pièce **5** est déplacée d'une valeur axiale **Zₑ** avec les défauts correspondants **X_{ze}** et **Y_{ze}.** Puis entre les étapes illustrées aux **Fig. 3** et **4****,** la pièce **5** est déplacée d'une valeur axiale **Z_{c}** avec les défauts correspondants **X_{zc}** et **Y_{zc}.** Toutefois, dans la mesure où entre les **Fig. 4** et **5****,** la pièce **5** est déplacée d'une valeur - **(Z_{c} + Zₑ),** les défauts précédents sont annulés.

Un tel procédé permet d'obtenir une très bonne précision latérale selon les axes **X, Y.** Il est à noter que la pièce 5 n'est pas déplacée selon les **axes X, Y** entre l'étape de positionnement **(****Fig. 4****)** et l'étape d'usinage (**Fig.** 5).

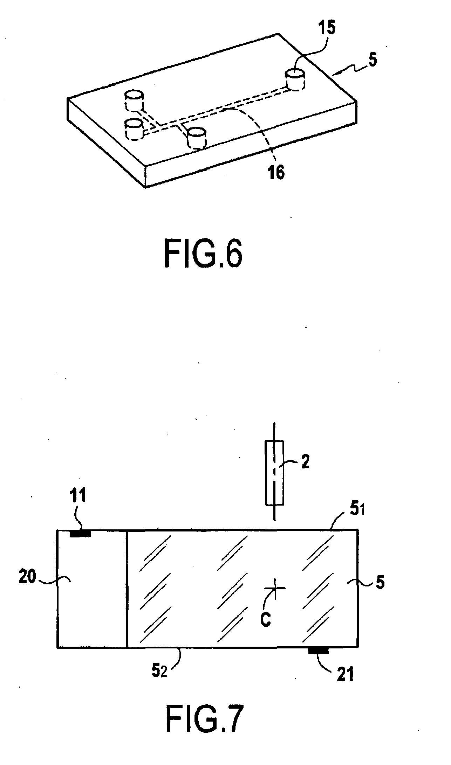

La technique de positionnement conforme à l'invention permet d'obtenir une très bonne précision. L'erreur de positionnement dépend uniquement de la reproductibilité des déplacements selon les axes **X, Y,** Z et des erreurs d'appréciation sur les images du microscope **9.** Cette technique permet notamment d'obtenir une bonne concentricité pour des trous **15** devant être raccordés à des microcanaux **16** d'un système microfluidique **5** comme illustré à la **Fig. 6****.**

Il est à noter que la position du point d'usinage **C** peut être connue ou correspondre à un détail géométrique de la pièce **5** tel qu'un trou, un canal, une arête, etc. Par ailleurs, il est à noter que la position du point d'usinage C peut être connue par rapport à un repère réalisé ou présenté par la pièce **5,** par exemple par des techniques de gravure lithographique.

Dans l'exemple illustré, le microscope **9** permet de visualiser une empreinte **11** réalisée par le micro-outil **2** sur une face opposée à celle à travers laquelle le microscope visualise l'empreinte.

Dans le cas où la pièce **5** est réalisée en un matériau opaque **(****Fig. 7****),** il peut être envisagé de fixer de manière temporaire ou définitive à la pièce **5,** une pièce **20** intermédiaire de nature transparente. Dans ce cas, l'empreinte **11** est réalisée sur la pièce transparente **20** comme décrit ci-dessus. Il est à noter que la pièce opaque **5** doit comporter au moins un repère de positionnement **21** sur la face **5₂** opposée de la face **5₁** située du côté du micro-outil **2** pour permettre de servir de point intermédiaire de positionnement pour le microscope **9** afin de réaliser ensuite l'usinage au point C dont la position par rapport au point intermédiaire **21** est connue.

L'invention n'est pas limitée aux exemples décrits et représentés car diverses modifications peuvent y être apportées sans sortir du cadre tel que défini par les revendications.

## Revendications

1. Procédé pour positionner à l'aide d'un microscope (**9**) muni d'un réticule (**10**), une pièce (**5**) pour permettre son usinage en un point d'usinage (**C**), à l'aide d'un micro-outil d'enlèvement de matière (**2**), **caractérisé en ce qu'** :
- on déplace la pièce (**5**) par rapport au micro-outil (**2**) afin de réaliser une empreinte (**11**) sur la pièce (**5**) à l'aide du micro-outil (**2**),
- on écarte selon l'axe (**Z**) d'une première mesure (**Zₑ**), la pièce (**5**) par rapport au micro-outil (**2**) afin de la placer dans une position de référence dans laquelle on visualise l'empreinte (**11**) dans le réticule (**10**) du microscope (**9**),
- on déplace la pièce (**5**) selon l'axe (**Z**) d'au moins une deuxième mesure (**Z_{c}**) pour placer le point d'usinage (**C**) de la pièce (**5**) dans le réticule (**10**) du microscope(**9**),
- et on rapproche selon l'axe (**Z**) la pièce (**5**) du micro-outil (**2**) d'une valeur égale à la somme des première (**Zₑ**) et deuxième (**Z_{c}**) mesures axiales pour assurer l'usinage par le micro-outil (**2**), de la pièce (**5**) au point d'usinage (**C**).

2. Procédé selon la revendication 1, **caractérisé en ce qu'**il consiste à choisir comme point d'usinage (**C**), un repère optique réalisé sur la pièce ou présenté par la pièce (**5**).

3. Procédé selon la revendication 1, **caractérisé en ce qu'**il consiste à choisir le point d'usinage (**C**) par rapport à un repère optique réalisé sur la pièce (**5**) ou présenté par la pièce (**5**).

4. Procédé selon la revendication 1, **caractérisé en ce qu'**il consiste à visualiser l'empreinte (**11**) à travers la pièce (**5**) de nature transparente.

5. Procédé selon la revendication 1, **caractérisé en ce qu'**il consiste à visualiser l'empreinte (**11**) à travers une pièce intermédiaire (**20**) de nature transparente assemblée fixement à la pièce (**5**) à usiner de nature opaque.

6. Procédé selon la revendication 1, **caractérisé en ce qu'**il consiste à maintenir en position fixe le microscope (**9**) lors du positionnement du point d'usinage (**C**) de la pièce (**5**) dans le réticule (**10**) du microscope (**9**).

7. Procédé selon la revendication 6, **caractérisé en ce qu'**il consiste à visualiser l'empreinte (**11**) dans le réticule (**10**) du microscope (**9**) lors de la réalisation de l'empreinte (**11**) sur la pièce(**5**).

8. Procédé selon les revendications 1 et 7, **caractérisé en ce qu'**il consiste à déplacer le microscope (**9**) pour visualiser et centrer l'empreinte (**11**) dans le réticule (**10**) du microscope (**9**).

9. Machine outil pour usiner à l'aide d'un micro-outil (**2**) rotatif une pièce (**5**) supportée par un premier système de positionnement (**4**), **caractérisé en ce que** la machine comporte :
- un microscope (**9**) comportant un réticule (**10**) et déplaçable par un deuxième système de positionnement (**7**), le microscope (**9**) s'étendant d'un côté de la pièce (**5**) située du côté opposé de celui occupé par un micro-outil (**2**),
- un dispositif de commande des systèmes de positionnement (**4, 7**) pour déplacer la pièce (**5**) et le microscope (**9**) selon le procédé conforme à la revendication 1.

10. Machine outil selon la revendication 9 **caractérisée en ce que** le microscope (**9**) est équipé d'une caméra reliée à un écran de visualisation sur lequel est tracée une mire jouant le rôle de réticule.

## Patentansprüche

1. Verfahren, um mit Hilfe eines mit einem Fadenkreuz (10) ausgestatteten Mikroskops (9) ein Teil (5) zu positionieren, um dessen Bearbeitung an einer Bearbeitungsstelle (C) mit Hilfe eines spanabhebenden Mikrowerkzeugs (2) zu ermöglichen, **dadurch gekennzeichnet, dass**:
- das Teil (5) gegenüber dem Mikrowerkzeug (2) bewegt wird, um einen Eindruck (11) an dem Teil (5) mit Hilfe des Mikrowerkzeugs (2) herzustellen,
- das Teil (5) entlang der Achse (Z) um ein erstes Maß (Zₑ) von dem Mikrowerkzeug (2) entfernt wird, um es in eine Referenzposition zu bringen, in der der Eindruck (11) in dem Fadenkreuz (10) des Mikroskops (9) angezeigt wird,
- das Teil (5) entlang der Achse (Z) um wenigstens ein zweites Maß (Z_{c}) bewegt wird, um die Bearbeitungsstelle (C) des Teils (5) in dem Fadenkreuz (10) des Mikroskops (9) zu platzieren, und
- das Teil (5) entlang der Achse (Z) dem Mikrowerkzeug (2) um einen Wert gleich der Summe aus dem ersten (Zₑ) und dem zweiten (Z_{c}) Axialmaß genähert wird, um die Bearbeitung des Teils (5) an der Bearbeitungsstelle (C) durch das Mikrowerkzeug (2) sicherzustellen.

2. Verfahren nach Anspruch 1, **dadurch gekennzeichnet, dass** es darin besteht, als Bearbeitungsstelle (C) eine optische Markierung, die an dem Teil ausgebildet ist oder die das Teil (5) aufweist, zu wählen.

3. Verfahren nach Anspruch 1, **dadurch gekennzeichnet, dass** es darin besteht, die Bearbeitungsstelle (C) in Bezug auf eine optische Markierung, die an dem Teil (5) ausgebildet ist oder die das Teil (5) aufweist, zu wählen.

4. Verfahren nach Anspruch 1, **dadurch gekennzeichnet, dass** es darin besteht, den Eindruck (11) durch das Teil (5) transparenter Art sichtbar zu machen.

5. Verfahren nach Anspruch 1, **dadurch gekennzeichnet, dass** es darin besteht, den Eindruck (11) durch ein Zwischenteil (20) transparenter Art, das mit dem zu bearbeitenden Teil (5) opaker Art fest zusammengefügt ist, sichtbar zu machen.

6. Verfahren nach Anspruch 1, **dadurch gekennzeichnet, dass** es darin besteht, das Mikroskop (9) während des Positionierens der Bearbeitungsstelle (C) des Teils (5) in dem Fadenkreuz (10) des Mikroskops (9) in fester Position zu halten.

7. Verfahren nach Anspruch 6, **dadurch gekennzeichnet, dass** es darin besteht, den Eindruck (11) während des Herstellens des Eindrucks (11) an dem Teil (5) in dem Fadenkreuz (10) des Mikroskops (9) anzuzeigen.

8. Verfahren nach den Ansprüchen 1 und 7, **dadurch gekennzeichnet, dass** es darin besteht, das Mikroskop (9) zu bewegen, um den Eindruck (11) in dem Fadenkreuz (10) des Mikroskops (9) anzuzeigen und zu zentrieren.

9. Werkzeugmaschine, um mit Hilfe eines umlaufenden Mikrowerkzeugs (2) ein durch ein erstes Positionierungssystem (4) getragenes Teil (5) zu bearbeiten, **dadurch gekennzeichnet, dass** die Maschine umfasst:
- ein Mikroskop (9), das ein Fadenkreuz (10) umfasst und durch ein zweites Positionierungssystem (7) bewegbar ist, wobei das Mikroskop (9) sich auf einer Seite des Teils (5) erstreckt, das auf der Seite gegenüber der durch ein Mikrowerkzeug (2) eingenommenen gelegen ist,
- eine Vorrichtung zur Steuerung der Positionierungssysteme (4, 7), um das Teil (5) und das Mikroskop (9) gemäß dem Verfahren nach Anspruch 1 zu bewegen.

10. Werkzeugmaschine nach Anspruch 9, **dadurch gekennzeichnet, dass** das Mikroskop (9) mit einer Kamera ausgestattet ist, die mit einem Bildschirm, auf dem ein die Funktion eines Fadenkreuzes übernehmendes Visier aufgetragen ist, verbunden ist.

## Claims

1. A method of positioning a workpiece (5) by using a microscope (9) provided with a reticle (10) so as to enable said workpiece (5) to be machined at a machining point (C), by using a material-removal micro-tool (2), said method being **characterized in that** it consists in:
• moving the workpiece (5) relative to the micro-tool (2) in order to form an impression (11) in the workpiece (5) by means of the micro-tool (2);
• moving the workpiece (5) away from the micro-tool (2) along an axis (Z) by a first distance measurement (Zₑ), so as to place said workpiece in a reference position in which the impression (11) is viewed in the reticle (10) of the microscope (9);
• moving the workpiece (5) along the axis (Z) by at least a second measurement (Z_{c}) so as to place the machining point (C) of the workpiece (5) in the reticle (10) of the microscope (9); and
• moving the workpiece (5) towards the micro-tool (2) along the axis (Z) by a value equal to the sum of the first axial measurement (Zₑ) and of the second axial measurement (Z_{c}) so that the micro-tool (2) machines the workpiece (5) at the machining point (C).

2. A method according to claim 1, **characterized in that** it further consists in choosing as a machining point (C) an optical mark that is formed on the workpiece (5) or that is presented by the workpiece (5).

3. A method according to claim 1, **characterized in that** it further consists in choosing the machining point (C) relative to an optical mark that is formed on the workpiece (5) or that is presented by the workpiece (5).

4. A method according to claim 1, **characterized in that** it further consists in viewing the impression (11) through the workpiece (5) that is transparent.

5. A method according to claim 1, **characterized in that** it further consists in viewing the impression (11) through a transparent intermediate piece (20) assembled in non relatively movable manner to the workpiece (5) to be machined that is opaque.

6. A method according to claim 1, **characterized in that** it further consists in maintaining the microscope (9) in a stationary position while the machining point (C) of the workpiece (5) is being positioned in the reticle (10) of the microscope (9).

7. A method according to claim 6, **characterized in that** it further consists in viewing the impression (11) in the reticle (10) of the microscope (9) while the impression (11) is being formed on the workpiece (5).

8. A method according to claims 1 and 7, **characterized in that** it further consists in moving the microscope (9) so as to view and to center the impression (11) in the reticle (10) of the microscope (9).

9. A machine tool for machining a workpiece (5) by means of a rotary micro-tool (2), said workpiece being supported by a first positioning system (4), said machine tool being **characterized in that** it includes:
• a microscope (9) having a reticle (10) and movable by a second positioning system (7), the microscope (9) extending on a side of the workpiece (5) that is situated opposite from a side on which the micro-tool (2) is placed; and
• control apparatus for controlling the positioning systems (4, 7) so as to move the workpiece (5) and the microscope (9) using the method according to claim 1.

10. A machine tool according to claim 9, **characterized in that** the microscope (9) is equipped with a camera connected to a viewing screen on which a target is drawn that acts as a reticle.
